# EUROPEAN PATENT SPECIFICATION

(11) **EP 3 390 909 B1**
(45) Date of publication and mention of the grant of the patent: **24.11.2021**
(21) Application number: 16815797.2
(22) Date of filing: 13.12.2016
(51) Int. Cl.: F23L 15/02, F23M 5/02, F23D 14/66

(54) **COMPACT BURNER WITH BOTH FUEL AND COMBUSTIVE AIR REGENERATION**
KOMPAKTER BRENNER MIT BRENNSTOFF- UND VERBRENNUNGSLUFTREGENERATION
BRÛLEUR COMPACT À RÉGÉNÉRATION D'AIR COMBURANT ET DE COMBUSTIBLE

(30) Priority: 15.12.2015 IT UB20159452
(43) Date of publication of application: 24.10.2018
(73) Proprietor: Tenova S.p.A., 20149 Milano (IT)
(72) Inventor: DELLA ROCCA, Alessandro, 66054 Vasto (CH) (IT); FANTUZZI, Massimiliano, 16149 Genova (IT)
(74) Representative: Franco Martegani S.r.l.
(86) International application number: PCT/EP2016/080846
(87) International publication number: WO 2017/102758

(56) References cited:
- WO-A1-2015/075666
- JP-A- H07 113 509
- JP-B2- 3 302 062
- US-A- 6 036 476

## Description

The present invention relates to a compact burner with both fuel and combustive air regeneration.

In steel furnaces, high-temperature processes take place, which generally require high-calorific-value fuels for reaching the process temperature, wherein, for example, these temperatures indicatively reach temperatures of up to 1,150°C - 1,320°C in the furnaces.

It should be pointed out, however, that costly energy resources - such as noble chemical sources like natural gas - are specifically used for facilitating variations in the productivity of these apparatuses.

It is also known that these large apparatuses consume significant quantities of thermal energy for their functioning. For this reason, attempts are being made in the steel industry to substitute noble energy sources, such as natural gas, with gases produced as by-products generated with other production apparatuses, such as, for example, blast furnaces or coke ovens. This tendency has the benefit of reducing the emission levels of CO₂ on the part of the whole industrial plant. This is the case, as normally the process gases generated as by-products by modern and efficient equipment, generally have increasingly lower calorific powers. This means that these by-products cannot be easily used as fuels in process equipment operating at high temperatures. These by-products are consequently used with a low efficiency for the generation of electric energy or flare burnt before being released into the atmosphere.

The process equipment is consequently fed with nobler fuels, thus increasing the massive emissions of CO₂ on the part of the whole plant, in addition to increasing the production costs. A more efficient use of the by-products within the production plant therefore allows considerable benefits for the environment and for the profitability of industrial production, to be obtained.

All of these issues have resulted in a tendency, particularly in the steel production field, to promote the use of regenerative burners which, by preheating the combustion air, are capable of recovering energy which would otherwise be lost in the exhaust fumes, at the same time allowing the use of by-products characterized by a low calorific value.

In order to allow the use of these by-products having a low calorific value in high-temperature processes, resort is made to preheating the fuel in a centralized heat recovery unit and at times, when available, to mixing with nobler fuels. In order to optimize the consumption of the noble fuel fraction, resort is also made to regeneration of the combustive air.

Current regenerative burners, however, only preheat the combustive air due to the fact that complex hydrocarbons are subject to cracking phenomena which degrade the effective calorific power released during the combustion process.

In the case of by-products without or with a limited presence of complex hydrocarbons, however, such as, for example blast-furnace gas characterized by a high presence of carbon monoxide, fuel regeneration is advantageous due to:
- the reduction and potential zeroing of the use of noble fuels;
- the use of more energy-efficiency by-products having a low calorific value;
- the use of said low-calorific products in high-temperature processes;
- the possibility of feeding the furnace with low calorific gas at room temperature by means of gas pipes having reduced dimensions with respect to preheating the above gas;
- the overall reduction in CO₂ emissions into the atmosphere.

With respect to the known art illustrated in the prior patent CN204114925U relating to a technology similar in some ways to the present invention, the present invention proposes an improvement in the combustion, to limit the unburned products and allow an easier cold ignition.

US 6036476 A relates to a burner positioned in a combustion apparatus.

WO 2015/075666 relates to a self-regenerating industrial burner and an industrial furnace for effecting combustion processes.

A general objective of the present invention is to provide a regenerative burner capable of regenerating both combustive air and fuel having a low calorific value, such as for example blast-furnace gas, in an extremely simple, economical and function manner for the operating of the production equipment.

A further objective of the present invention is to provide a regenerative burner capable of effecting a stable combustion between fuel and combustive air, both at room temperature, i.e. not regenerated, inside a combustion chamber also initially at room temperature. This mode is important for the starting phase of an industrial furnace, when the fumes inside the chamber are still not sufficiently hot as to guarantee the ignition of the mixture.

Another objective of the present invention is to offer a regenerative burner with the possibility of having a mixed feeding mode as an alternative to that of gas having a low calorific value alone.

The structural and functional characteristics of the present invention and its advantages with respect to the known art will appear even more evident from the following description, referring to the enclosed schematic drawings which show an embodiment example of the same invention. In the drawings:

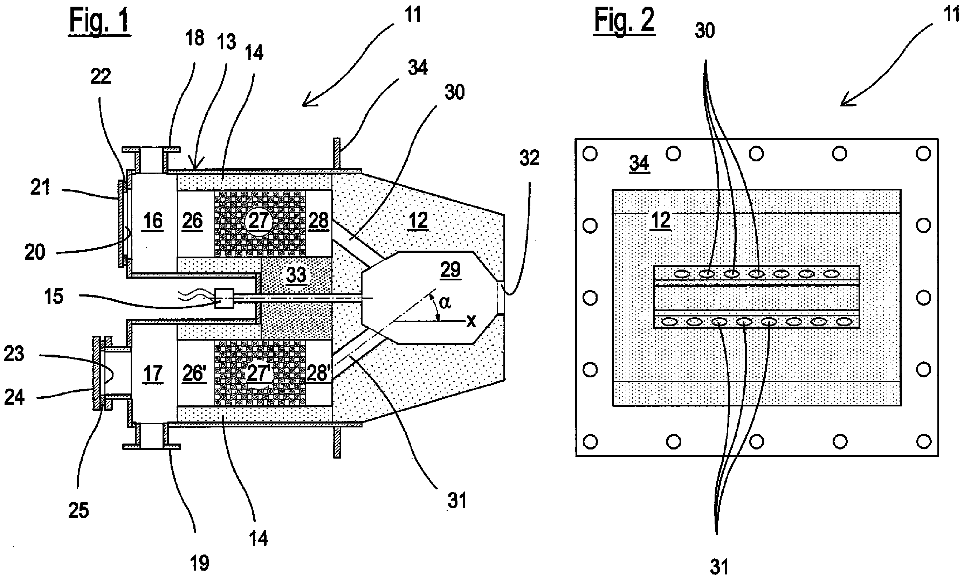

- figure 1 is a raised sectional side view of a compact regenerative burner according to the present invention, and
- figure 2 is a further sectional view of the regenerative burner illustrated in figure 1.

With reference to the figures, a compact regenerative burner according to the present invention is indicated as a whole with 11 and defines a regenerative double-burner.

Said regenerative burner comprises as a whole, a refractory block 12, a metallic body 13 of the burner, internally coated with an insulating refractory layer 14, and a pilot burner or an ignition device 15 with flame detection.

The space occupied by the ignition device 15 can be used for housing the injection lance of non-regenerated fuel.

The refractory block 12 is positioned directly facing a combustion chamber of the furnace (not shown).

The metallic body 13 of the burner essentially comprises an air-regeneration unit 16 and a fuel-regeneration unit 17, collaborating and integrated with each other, and supported in the metallic body 13, and both coated by the insulating refractory layer 14. In particular, in the example shown, the air-regeneration unit 16 is provided with a connection flange 18 for the air and regenerated waste fumes. The fuel-regeneration unit 17 is provided with a connection flange 19 for the fuel and regenerated exhaust fumes, for the regeneration and combustion modes, respectively.

An inspection and control 20 is positioned on the air-regeneration unit 16, for allowing maintenance operations. Said inspection and control hole 20 comprises a closing flange 21 and a gasket 22 suitable for average temperatures and pressure drops. Another inspection hole 23 is provided on the fuel-regeneration unit 17 for the same reasons, and this also comprises a closing flange 24 with a suitable gasket 25 capable of avoiding harmful and dangerous fuel losses in the surrounding environment.

More specifically, the air-regeneration unit 16 comprises a cold plenum 26, a porous regeneration means 27 and a hot plenum 28. The cold plenum 26 allows a uniform distribution of the air entering from the flange 18 when the burner is in combustion mode. The porous regeneration means 27 acts as a heat accumulator during the regeneration mode when the hot exhaust gases are extracted from the combustion chamber of the furnace. This extraction is effected through ducts composed of connected passages comprising a combustion pre-chamber of the burner 29 followed by intermediate ducts 30 towards the hot plenum 28 and the exhaust gases are then cooled by interacting with the cold regeneration means 27.

During the combustion mode, the regeneration means 27 act as heat source for the incoming air which passes through the flange 18, then through the cold plenum 26, through the regeneration means 27 and finally through the intermediate ducts 30, in the combustion pre-chamber of the burner 29.

The fuel-regeneration unit 17 operates analogously in both the regeneration mode and also in the combustion mode. For this unit, similar elements are indicated with similar reference numbers as those of the air-regeneration unit 16, followed by an apostrophe. This unit 17 therefore also comprises a cold plenum 26', a porous regeneration means 27' and a hot plenum 28' .

The refractory block 12 of the burner 11 is a hollow block in which the combustion pre-chamber of the burner 29 is positioned. Said combustion pre-chamber of the burner 29 acts as a correct mixer of the reagents in order to establish a stable flame during the cold ignition of the whole double regenerative combustion system which is composed of various double-regenerative burners. This allows only double-regenerative burners to be installed without the need for additional burners for simply pre-heating the combustion chamber of the furnace above the self-ignition temperature, thus offering significant technical and economic advantages with a double-regenerative combustion system. The combustion pre-chamber of the burner 29 also prevents the formation of partial combustion products as the combustion process is correctly started even when cold reagents are used.

The combustion pre-chamber of the burner 29 can be produced in a cavity having different possible forms with various series of passages connected therewith. A first series of adjacent passages comprising intermediate ducts or air inlets 30 and a second series of adjacent passages comprising intermediate ducts or fuel inlets 31, positioned in said refractory block 12, are connected by said combustion pre-chamber of the burner 29 towards the air-regeneration unit 16 and towards the fuel-regeneration unit 17, respectively. According to the present invention, said ducts or adjacent passages 30 and 31 are tilted by an angle α with respect to a horizontal axis x of the burner, wherein said value of α ranges from 0°C to 90°C, so as to favour the circulation of both the exhaust gases returning from the combustion chamber of the furnace and also the air and fuel coming from the air-regeneration unit 16 and fuel-regeneration unit 17.

A third series of ducts 32 is positioned between the combustion pre-chamber of the burner 29 towards the combustion chamber of the furnace to allow the passage of the outgoing combustion products when the burner is in combustion mode. When the burner is in regeneration mode, on the other hand, the same passages or ducts 32 act differently as passages for the exhaust gases coming from the combustion chamber of the furnace.

In this case, in fact, the combustion pre-chamber of the burner 29 acts as a plenum for said exhaust gases. In this chamber, the fractionation takes place of the flow of exhaust gases coming from the combustion chamber of the furnace into two different flows, i.e. exhaust gases which must be regenerated inside the air-regeneration unit 16 that pass through the passages 30 and exhaust gases which must be regenerated inside the fuel-regeneration unit 17 that pass through the passages 31. The fractionation of the flow-rate of incoming exhaust gases is effected by means of a correct dimensioning of the passages 30 and 31 which is such as to generate a balanced distribution of the pressure drops. The purpose of this fractionation is to generate, during the regeneration phase, a ratio between the flow-rate of fumes in 30 and that in 31 similar to the ratio between the flow-rate of air in 30 and the flow-rate of fuel in 31 during the combustion phase.

The refractory block 12, which characterizes the combustion pre-chamber of the burner 29, is connected to the body of the burner 13 containing the two units, i.e. the air-regeneration unit 16 and the fuel-regeneration unit 17, separated from each other. The combustion pre-chamber of the burner 29 is fed by the hot plenums 28 and 28' .

The pilot burner 15 with flame detection is positioned in an intermediate area between the air-regeneration unit 16 and the fuel-regeneration unit 17, as it must also be stably connected to the metallic body 13 of the burner.

It is specifically in this intermediate area of the metallic body 13 of the burner that any possible interaction between the air-regeneration unit 16 and the fuel-regeneration unit 17 must be avoided.

First of all, the hot plenums 28 and 28' of the two units 16, 17, in addition to being partially surrounded by the refractory layer 14, are separated by means of an intermediate refractory block 33, for example, but not necessarily, made of prefabricated refractory material. Said intermediate refractory block 33 has the specific function of providing a seal or inherently stable and robust barrier with respect to thermal circulation movements between the air-regeneration unit 16 and the fuel-regeneration unit 17, and also a seal with respect to the refractory block 12.

The special intermediate refractory block 33 surrounds and protects the pilot burner system 15 with flame detection that provides functions of combustion and detection to the flammable mixture inside the combustion pre-chamber of the burner 29. As an alternative to this pilot burner system 15, a spark plug and also a flame detection system can be provided.

The special intermediate refractory block 33 also facilitates and establishes a stable positioning with respect to the associated refractory block 12 by means of specific provisions on their facing connection surfaces in the form, for example, of cuts and ridges. These specific provisions, having various geometrical characteristics, can also be used for increasing the seal between the parts and preventing air leaks from the hot air plenum 28 into the hot fuel plenum 28' or viceversa, which could possibly lead to the self-ignition of the resulting mixture with consequent danger.

The provision of a metallic body 13 of the burner in a single piece provided with a single front flange 34 for positioning with respect to the furnace, or the combustion chamber of the furnace, simplifies the layout of both the air-regeneration unit 16 and the fuel-regeneration unit 17.

The provision of the refractory block 33 intermediately positioned between the air-regeneration unit 16 and the fuel-regeneration unit 17, kept integral by the metallic body 13 of the burner, ensures the isolation of each regeneration unit 16, 17 preventing any possible interaction, even accidental, between the same.

Furthermore, in the alternative functioning mode with richer fuel, said refractory block 33 can house, alternatively to the ignition device 15 with flame detection, an injection lance of non-regenerated fuel.

It can therefore be seen how, with respect to the known art of the prior patent CN204114925U, the present invention obtains a marked improvement in the combustion, it limits unburned products and allows an easy cold start: this is due to the introduction of a combustion pre-chamber capable of stabilizing the combustion, limiting unburned products and allowing the cold ignition of the whole apparatus. Furthermore, the two regenerators of the combustive air and gas, respectively, are integrated in a single compact body, through a design which is able to ensure the safe operation of the burner.

According to the invention, a regenerative burner can also be obtained, with the possibility of a mixed feeding mode alternative to that of low-calorific-value gas alone.

This necessity can arise if the production equipment does not provide the process with the by-products used by the same as fuel, for example during a maintenance stoppage. This, for example, can include the case in which the burner designed for being a double-regenerative burner is fed with a richer fuel, such as liquefied petroleum gas, for example, not injected through the gas regenerator but through another duct.

The forms of the structure for the production of a burner of the invention, as also the materials and assembly modes, can naturally differ from those shown for purely illustrative and non-limiting purposes in the drawings.

The objective mentioned in the preamble of the description has therefore been achieved.

The protection scope of the present invention is defined by the enclosed claims.

## Claims

1. A compact burner with both fuel and combustive-air regeneration (11) comprising:
a refractory block (12), a metallic body (13) of the burner, internally coated with an insulating refractory layer (14), and an ignition device (15) with flame detection,
wherein said refractory block (12) is positioned directly facing a combustion chamber of a furnace,
wherein said metallic body (13) of the burner comprises a pair of regeneration units (16, 17) both coated by said insulating refractory layer (14),
an intermediate refractory block (33) also being provided, which separates said pair of regeneration units (16, 17) and sealingly collaborates with said refractory block (12),
said pair of regeneration units comprises an air-regeneration unit (16) and a fuel-regeneration unit (17) integrated with each other and supported in said metallic body (13),
said air-regeneration unit (16) and fuel-regeneration unit (17) both being connected to a single combustion pre-chamber of the burner (29) positioned in said refractory block (12), wherein said combustion pre-chamber of the burner (29) is also connected to said ignition device (15) with flame detection interposed in said two units (16, 17), wherein said air-regeneration unit (16) and fuel-regeneration unit (17) are connected to said combustion pre-chamber of the burner (29) through a respective first and second series of adjacent passages or ducts (30,31) positioned in said refractory block (12).

2. The regenerative burner according to claim 1, wherein said air-regeneration unit (16) and fuel-regeneration unit (17) both comprise a cold plenum (26, 26'), a porous regeneration means (27, 27') and a hot plenum (28, 28').

3. The regenerative burner according to claim 1 or 2, wherein said air-regeneration unit (16) and fuel-regeneration unit (17) both provide an inspection and control hole (20, 23) provided with a closing flange (21, 24) and a gasket (22, 25).

4. The regenerative burner according to claim 1, wherein said adjacent passages or ducts (30,31) are arranged with an inclination of an angle α with respect to a horizontal axis x of the burner, wherein said value of α ranges from 0° to 90°.

5. The regenerative burner according to one or more of the previous claims, wherein said intermediate refractory block (33) surrounds said ignition device (15) with flame detection.

6. The regenerative burner according to one or more of the previous claims, wherein said metallic body (13) of the burner is in a single piece, supports both said air-regeneration unit (16) and said fuel-regeneration unit (17) and is equipped with a single front flange (34) for positioning with respect to the furnace, i.e. the combustion chamber of the furnace.

7. The regenerative burner according to one or more of the previous claims, wherein a housing space of the ignition device (15) is provided in which fuel injection is effected.

## Patentansprüche

1. Kompakter Brenner mit Brennstoff- und Verbrennungsluftregeneration (11), umfassend:
einen feuerfesten Block (12), einen Metallkörper (13) des Brenners, der innen mit einer isolierenden feuerfesten Schicht (14) beschichtet ist, und eine Zündvorrichtung (15) mit Flammenerkennung, wobei der feuerfeste Block (12) direkt gegenüber einer Verbrennungskammer eines Ofens angeordnet ist,
wobei der Metallkörper (13) des Brenners ein Paar von Regenerationseinheiten (16, 17) umfasst, die beide mit der isolierenden feuerfesten Schicht (14) beschichtet sind, wobei auch ein dazwischenliegender feuerfester Block (33) vorgesehen ist, der das Paar von Regenerationseinheiten (16, 17) trennt und abdichtend mit dem feuerfesten Block (12) zusammenwirkt, wobei das Paar von Regenerationseinheiten eine Luftregenerationseinheit (16) und eine Brennstoffregenerationseinheit (17) umfasst, die miteinander integriert sind und in dem Metallkörper (13) gehalten sind,
wobei die Luftregenerationseinheit (16) und die Brennstoffregenerationseinheit (17) beide mit einer einzelnen Verbrennungsvorkammer des Brenners (29) verbunden sind, die in dem feuerfesten Block (12) angeordnet ist, wobei die Verbrennungsvorkammer des Brenners (29) auch mit der Zündvorrichtung (15) mit Flammenerfassung verbunden ist, die zwischen den beiden Einheiten (16, 17) angeordnet ist, wobei die Luftregenerationseinheit (16) und die Brennstoffregenerationseinheit (17) mit der Verbrennungsvorkammer des Brenners (29) durch eine jeweilige erste und zweite Reihe von benachbarten Durchgängen oder Kanälen (30, 31) verbunden sind, die in dem feuerfesten Block (12) angeordnet sind.

2. Regenerativer Brenner nach Anspruch 1,
wobei die Luftregenerationseinheit (16) und die Brennstoffregenerationseinheit (17) beide eine kalte Sammelkammer (26, 26'), ein poröses Regenerationsmittel (27, 27') und eine heiße Sammelkammer (28, 28') umfassen.

3. Regenerativer Brenner nach einem der Ansprüche 1 oder 2,
wobei die Luftregenerationseinheit (16) und die Brennstoffregenerationseinheit (17) beide eine Inspektions- und Kontrollöffnung (20, 23) aufweisen, die mit einem Verschlussflansch (21, 24) und einer Dichtung (22, 25) versehen ist.

4. Regenerativer Brenner nach Anspruch 1,
wobei die benachbarten Durchgänge oder Kanäle (30, 31) mit einer Neigung eines Winkels α in Bezug auf eine horizontale Achse X des Brenners angeordnet sind, wobei der Wert von α zwischen 0° und 90° liegt.

5. Regenerativer Brenner nach einem der vorhergehenden Ansprüche, wobei der dazwischenliegende feuerfeste Block (33) die Zündvorrichtung (15) mit Flammenerkennung umgibt.

6. Regenerativer Brenner nach einem der vorhergehenden Ansprüche, wobei der Metallkörper (13) des Brenners aus einem einzelnen Stück besteht, sowohl die Luftregenerationseinheit (16) als auch die Brennstoffregenerationseinheit (17) trägt und mit einem einzigen Vorderflansch (34) zur Positionierung in Bezug auf den Ofen, d. h. der Brennkammer des Ofens ausgestattet ist.

7. Regenerativer Brenner nach einem der vorhergehenden Ansprüche, wobei ein Gehäuseraum der Zündvorrichtung (15) vorgesehen ist, in dem eine Brennstoffeinspritzung bewirkt wird.

## Revendications

1. Brûleur compact à régénération d'air comburant et de combustible (11) comprenant
un bloc réfractaire (12), un corps métallique (13) du brûleur, revêtu intérieurement d'une couche réfractaire isolante (14) et un dispositif d'allumage (15) avec détection de flamme,
dans lequel ledit bloc réfractaire (12) est positionné directement face à une chambre de combustion d'un fourneau,
dans lequel ledit corps métallique (13) du brûleur comprend une paire d'unités de régénération (16, 17), toutes deux revêtues par ladite couche réfractaire isolante (14),
étant également prévu un bloc réfractaire intermédiaire (33) qui sépare ladite paire d'unités de régénération (16, 17) et est associé hermétiquement avec ledit bloc réfractaire (12),
ladite paire d'unités de régénération comprenant une unité de régénération d'air (16) et une unité de régénération de combustible (17) intégrées l'une avec l'autre et supportées dans ledit corps métallique (13),
ladite unité de régénération d'air (16) et ladite unité de régénération de combustible (17) étant connectées à une unique préchambre de combustion du brûleur (29) positionnée dans ledit bloc réfractaire (12), ladite préchambre de combustion du brûleur (29) étant aussi connectée audit dispositif d'allumage (15) avec détection de flamme interposé dans lesdites deux unités (16, 17), lesdites unité de régénération d'air (16) et unité de régénération de carburant (17) étant connectées respectivement à ladite préchambre de combustion du brûleur (29) par une première et une seconde série de passages ou de conduits adjacents (30, 31) positionnés dans ledit bloc réfractaire (12).

2. Brûleur régénératif selon la revendication 1, dans lequel lesdites unité de régénération d'air (16) et unité de régénération de carburant (17) comprennent toutes deux un plénum froid (26, 26'), un moyen de régénération poreux (27, 27') et un plénum chaud (28, 28').

3. Brûleur régénératif selon la revendication 1 ou 2, dans lequel lesdites unité de régénération d'air (16) et unité de régénération de carburant (17) présentent toutes deux un trou d'inspection et de contrôle (20, 23) doté d'une flasque de fermeture (21, 24) et d'un joint (22, 25).

4. Brûleur régénératif selon la revendication 1, dans lequel lesdits passages ou conduits adjacents (30, 31) sont agencés avec un angle d'inclinaison α par rapport à un axe horizontal x du brûleur, ladite valeur de α variant de 0° à 90°.

5. Brûleur régénératif selon une ou plusieurs des revendications précédentes, dans lequel ledit bloc réfractaire intermédiaire (33) entoure ledit dispositif d'allumage (15) avec détection de flamme.

6. Brûleur régénératif selon une ou plusieurs des revendications précédentes, dans lequel ledit corps métallique (13) du brûleur est d'une seule pièce, supporte à la fois ladite unité de régénération d'air (16) et ladite unité de régénération de combustible (17) et est équipé d'une flasque frontale unique (34) pour le positionner par rapport au fourneau, c.-à-d. à la chambre de combustion du fourneau.

7. Brûleur régénératif selon une ou plusieurs des revendications précédentes, dans lequel il est prévu un espace de logement du dispositif d'allumage (15) dans lequel l'injection de combustible est effectuée.
